# FASCICULE DE BREVET EUROPEEN

(11) **EP 1 561 061 B1**
(45) Date de publication et mention de la délivrance du brevet: **22.03.2006**
(21) Numéro de dépôt: 03809767.1
(22) Date de dépôt: 17.10.2003
(51) Int. Cl.: F16L 11/08

(54) **CONDUITE TUBULAIRE FLEXIBLE POUR LE TRANSPORT D UN FLUIDE**
FLEXIBLE RÖHRENFÖRMIGE LEITUNG ZUM FLUIDTRANSPORT
FLEXIBLE TUBULAR PIPE FOR FLUID TRANSPORT

(30) Priorité: 25.10.2002 FR 0213377
(43) Date de publication de la demande: 10.08.2005
(73) Titulaire: Technip France, 92400 Courbevoie (FR)
(72) Inventeur: MARION, Alain, 76130 Mont-Saint-Aignan (FR); MALOBERTI, René Antoine, 94500 Champigny-sur-Marne (FR); COUTAREL, Alain, 76130 Mont-Saint-Aignan (FR)
(74) Mandataire: Bertrand, Didier
(86) Numéro de dépôt international: PCT/FR2003/003076
(87) Numéro de publication internationale: WO 2004/040183

(56) Documents cités:
- EP-A- 0 937 932
- FR-A- 2 663 401
- US-A- 4 567 916
- US-A- 6 039 083

## Description

La présente invention concerne une conduite tubulaire flexible du type de celles utilisées pour l'exploitation et le transport des fluides dans l'industrie pétrolière en mer, ou offshore. Elle concerne plus précisément des conduites destinées au transport de fluides dits polyphasiques ou de gaz.

Des conduites destinées au transport de fluide dans l'industrie pétrolière offshore sont décrites dans de nombreux brevets de la demanderesse tels que par exemple le brevet EP 0 937 932. Elles satisfont entre autre aux recommandations de l'API 17B (American Petroleum Institute Recommended Practice 17B). Ces conduites sont formées d'un ensemble de couches différentes destinées chacune à permettre à la conduite flexible de supporter les contraintes de service ou de manutention ainsi que les contraintes spécifiques liées à leur utilisation offshore. Ces couches comprennent notamment des gaines polymériques et des couches de renfort formées par des enroulements de fil de forme, de feuillard ou de fils en matériau composites, mais elle peuvent comprendre également des enroulements de bandes diverses entre les différentes couches de renfort. Elles comprennent plus particulièrement au moins une gaine d 'étanchéité interne ou gaine de pression destinée à véhiculer le fluide transporté. Ladite gaine d'étanchéité peut être l'élément le plus interne de la conduite, la conduite est alors dite de type « smooth bore », ou être disposée autour d'une carcasse formée par exemple de l'enroulement à pas court d'un feuillard agrafé, la conduite est alors dite de type « rough-bore ». Des couches de renforts formés d'enroulement de fils métalliques ou composites sont généralement disposées autour de la gaine de pression et peuvent comporter par exemple :
- Une armure de pression formée d'un enroulement à pas court d'un fil de forme métallique agrafé, ladite armure de pression étant disposée directement autour de la gaine d'étanchéité afin de reprendre la composante radiale de la pression interne.
- Eventuellement une frette formée d'un enroulement à pas court d'un fil de forme non agrafée située au-dessus de l'armure de pression pour contribuer à la résistance à la pression interne, l'armure de pression avec ou sans ladite frette forme ce qui est appelé la voûte de pression de la conduite.
- Des nappes d'armures de traction formées d'enroulements à pas long de fils de forme métalliques ou composites, lesdites nappes étant destinées à reprendre la composante axiale de la pression interne ainsi que les sollicitations longitudinales que subit la conduite, comme par exemple les efforts de pose.

Une gaine polymérique externe ou gaine de protection est généralement prévue au-dessus des couches de renfort précédemment citées. Dans certains cas, une gaine polymérique intermédiaire est également prévue. Cette gaine intermédiaire peut par exemple être une gaine dite anti-écrasement (« anti-collapse » en anglais) disposée généralement autour de la voûte de pression. Cette gaine intermédiaire a notamment pour objectif d'empêcher l'écrasement de la gaine d'étanchéité et de la carcasse éventuelle qu'elle entoure lorsque l'annulaire (espace situé entre la gaine d'étanchéité et la gaine externe) est soumis à une pression excessive comme par exemple, lorsque la gaine externe est endommagée et n'est plus étanche. Elle est généralement présente dans le cas d'un «Smooth Bore» car la gaine d'étanchéité est d'autant plus sensible à l'écrasement.

Dans les conduites flexibles de production, le fluide transporté est souvent polyphasique et il contient des gaz tels que l'H2S, le CO2 ou le méthane, qui peuvent diffuser à travers la gaine de pression. Le gaz diffusant à travers la gaine d'étanchéité de la conduite flexible augmente la pression dans l'annulaire au fur et à mesure de la diffusion. Cette augmentation de la pression dans l'annulaire peut conduire à des problèmes d'écrasement de la gaine interne et ce notamment dans le cas d'un «Smooth Bore» ou ladite gaine n'est pas retenue par une carcasse. Cela est par exemple le cas lorsque la pression de l'annulaire devient très supérieure à la pression régnant dans la conduite, comme lors d'un arrêt de production ou dans certaines conditions particulières en service. Aussi, il est prévu de drainer les gaz présents dans l'annulaire pour limiter la pression de celui-ci. Le drainage des gaz s'effectue à travers et le long des armures de traction vers une soupape de drainage généralement située au niveau d'un embout terminal de la conduite flexible.

Dans le cas d'un « smooth bore », la gaine intermédiaire située au dessus de la voûte de pression empêche le drainage du gaz dans la nappe d'armure de traction. Le drainage du gaz devrait alors être réalisé à l'intérieur de la voûte de pression, mais une telle solution n'est pas envisageable car il est très difficile de drainer efficacement le gaz dans une couche telle que la voûte de pression dont l'angle d'enroulement est proche de 90°. Ainsi, les conduites flexibles de type «Smooth Bore» ne sont pas utilisées pour le transport de fluide polyphasique ou de gaz et sont exclusivement réservé aux lignes d'injection d'eau, lignes pour lesquels il n'y a pas de problème de diffusion de gaz. Ainsi, seul les conduites du type «Rough Bore» sont utilisées pour réaliser des lignes de production, mais ces structures sont plus onéreuses en raison de la présence d'une couche métallique supplémentaire notamment.

Ainsi, il existe un besoin réel d'une structure à faible coût de type «Smooth Bore» qui puissent être utilisée pour transporter des fluides polyphasiques ou des gaz. Pour tenter de répondre à ce besoin, il a été proposé des solutions consistants à drainer le gaz au plus proche de la gaine de pression interne. Dans la demande de brevet WO 01/33130, il est décrit une conduite flexible dont la gaine interne présente des rainures sur sa surface externe, lesdites rainures étant destinées à drainer le gaz entre ladite gaine et la voûte de pression. Dans la demande de brevet FR 2 828 924 de la demanderesse, la gaine interne de pression est réalisée en deux couches (double gaine) et le gaz est drainé entre les deux gaines dans des rainures longitudinale prévues à cet effet. Toutefois, ces solutions sont très compliquées à mettre en oeuvre notamment en raison des problèmes de fluage des matériaux thermoplastiques utilisés pour faire les gaines.

Dans une autre demande relative à des conduites flexible du type « bonded » WO 99/66246, il est évoqué la circulation d'un liquide ou d'un gaz au dessus de la voûte de pression dans un espace libre ou partiellement libre. Toutefois, il n'est aucunement détaillé ni même suggéré une quelconque solution au problème de surpression dans l'annulaire du à un problème de gaz diffusant au travers de ta gaine de pression.

Dans un autre brevet EP 0 937 932, la demanderesse a décrit une conduite avec une structure qui comporte deux paires d'armures de traction et une gaine intermédiaire située entre la paire d'armure externe et la paire d'armure interne, ladite structure pouvant être un «Smooth Bore». Dans une telle structure, le gaz présent dans l'annulaire « interne » est drainé à l'intérieur de la paire de nappe d'armure intérieure qui présente un angle d'armage compris entre 30 et 55 °. Toutefois, cette solution proposée ne permet pas de réaliser une conduite de type « smooth bore » utilisable en production à faible coût, et ce notamment en raison des quatre nappes d'armures de traction prévues pour la conduite.

Par ailleurs, quelque soit le type de conduite («Smooth Bore» ou «Rough Bore») utilisé, le problème de la diffusion de gaz implique que les éléments métalliques de la structure (voûte de pression, armures de traction) qui se trouvent dans l'annulaire doivent être résistants à l'H2S notamment. Ceci implique un coût plus important du aux traitements particulier qu'ils subissent et les caractéristiques mécaniques obtenues restent moyennes.

Aussi, la présente invention a pour objectif de remédier aux inconvénients précités des structures de l'art antérieur en proposant une conduite flexible utilisable pour transporter des fluides polyphasiques ou des gaz.

La conduite tubulaire flexible destinée au transport de fluide dans le domaine de l'exploitation pétrolière offshore selon l'invention est du type comportant au moins de l'intérieur vers l'extérieur une gaine de pression, une voûte de pression, une gaine intermédiaire, au moins une nappe d'armures de traction et une gaine externe de protection et est caractérisée en ce qu'elle comporte une couche de drainage spécifique formée de l'enroulement d'au moins un élément allongé et positionnée entre la voûte de pression et la gaine intermédiaire.

Selon un mode de réalisation, la gaine de pression est l'élément le plus interne de la conduite flexible.

Selon une autre caractéristique, le ou les élément allongés est ou sont avantageusement enroulés autour de la voûte de pression selon un angle d'armage compris entre 55° et 80° et préférentiellement entre 55° et 70°.

Le ou les élément allongés formant la couche de drainage peuvent avantageusement être réalisés en matière plastique. Par ailleurs, ils présentent avantageusement une résistance suffisante dans le sens radial pour résister sans s'écraser à la pression hydrostatique régnant à la profondeur où la conduite doit être utilisée de manière à pouvoir transmettre cette pression à la voûte de pression sur laquelle ils sont enroulés.

Selon un mode de réalisation de l'invention, le ou les éléments allongés formant la couche de drainage spécifique est ou sont enroulés de manière à ménager un jeu minimum entre les spires pour permettre le drainage du gaz à l'intérieur desdits jeux.

Selon un autre mode de réalisation de l'invention, le ou les éléments allongés présentent des gorges ou rainures longitudinales qui permettent le drainage du gaz à l'intérieur des gorges le long du ou des éléments.

D'autres caractéristiques et avantages de l'invention se dégageront de la description qui va suivre en regards des dessins annexés qui ne sont donnés qu'à titre d'exemples non limitatifs.
- La figure 1 représente schématiquement en perspective une conduite flexible de l'invention de type « smooth bore» et ses différentes couches.
- La figure 2 représente en coupe longitudinale un premier mode de réalisation d'une conduite flexible de type « smooth-bore » de l'invention.
- La figure 3 représente en coupe longitudinale un second mode de réalisation d'une conduite flexible de type « smooth-bore » de l'invention.

La conduite tubulaire flexible 1 de l'invention est du type destinée à l'exploitation pétrolière offshore telle que celles définies par les recommandations de l'API 17B et l'API 17 J. Elle est constituée d'un ensemble de couches constitutives non liées comprenant des gaines polymériques et des couches de renfort ou armures, lesdites couches pouvant le cas échéant être séparées par des enroulements de bandes diverses destinées à éviter le fluage des gaines ou destinées à former une isolation thermique par exemple.

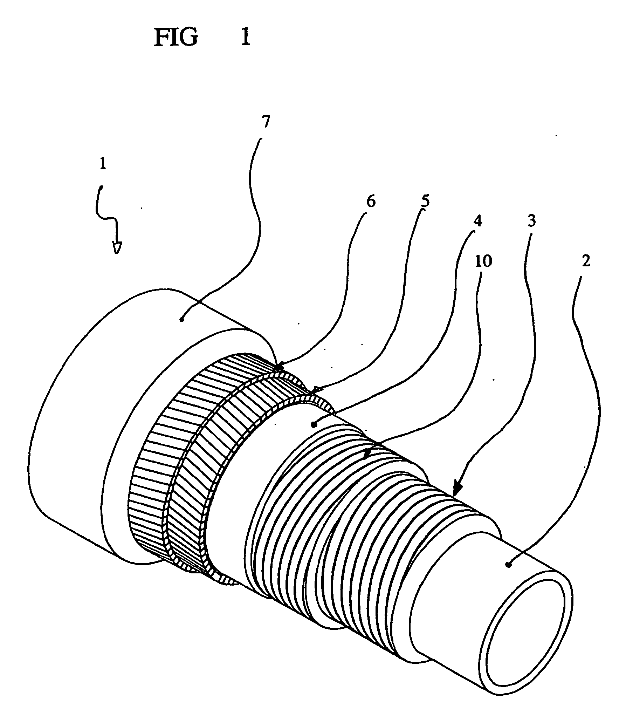

Selon le mode de réalisation de l'invention illustré figures 1 à 3, la conduite flexible portant la référence générale 1 est du type non liée (« unbonded » en anglais) et de type « smooth-bore », l'élémerit le plus interne étant formé par une gaine d'étanchéité ou gaine de pression 2. Elle est généralement obtenue par extrusion et a pour fonction de réaliser l'étanchéité du conduit (« bore » en anglais) où circule le fluide et de résister à la composante radiale de la pression interne exercée par ledit fluide à l'aide de la voûte de pression 3 qui la recouvre.

Cette voûte de pression 3 est par exemple formée d'un enroulement à pas court d'un fil de forme métallique agrafé et destiné à reprendre la pression interne avec la gaine de pression qu'elle recouvre. La conduite comprend également des nappes d'armures dites de traction 5,6 enroulées à pas long et destinées à reprendre les efforts longitudinaux auxquels peut être soumise la conduite (composante longitudinale de la pression ou efforts de pose par exemple). II va de soi que la voûte de pression pourrait également comporter une frette destinée à renforcer la résistance de la voûte à la pression interne. La conduite flexible 1 comporte également une gaine de protection externe 7 destinée à protéger les couches de renfort 3, 5, 6 situées dans l'espace annulaire qu'elle forme avec la gaine interne.

La conduite flexible 1 comporte ,une gaine intermédiaire 4 sous la forme d'une gaine anti-écrasement ou anti-collapse. Cette gaine définit deux espaces annulaires, un annulaire « interne » 30 situé entre elle et la gaine d'étanchéité 2 et un annulaire « externe » 20 entre elle et la gaine externe 7. Cette gaine intermédiaire 4 est notamment destinée à réduire les risques d'écrasement de la gaine d'étanchéité 2 lorsque la gaine externe est endommagée et que l'annulaire « externe » 20 se trouve soumis à la pression hydrostatique par exemple. Elle est ainsi destinée à supporter cette pression à l'aide de la couche sur laquelle elle s'appuie, empêchant la pression hydrostatique de venir s'appliquer directement sur la gaine d'étanchéité 2.

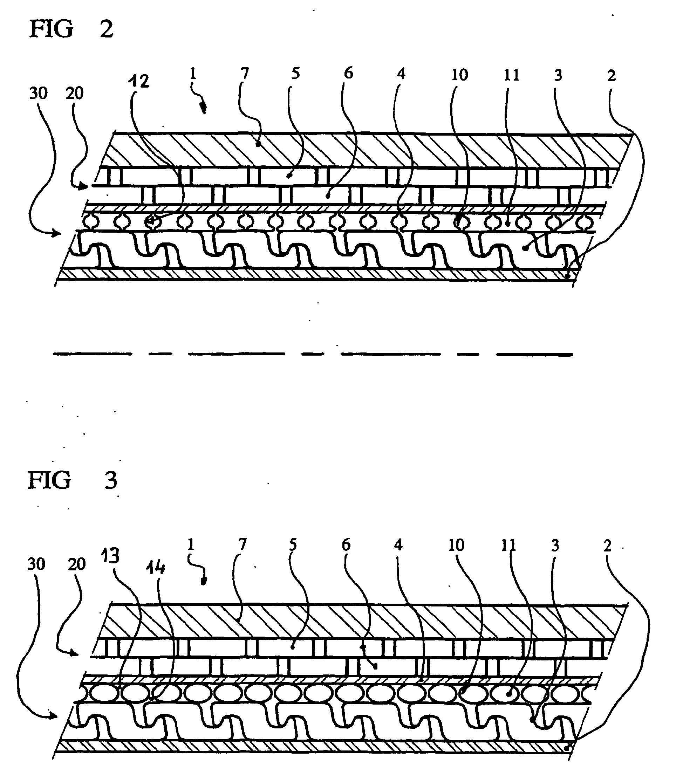

Selon l'invention, la conduite flexible 1 comporte une couche de drainage spécifique 10 destinée à permettre le drainage des gaz diffusant à travers la gaine de pression 2 dans l'annulaire interne. Cette couche spécifique est avantageusement disposée entre la voûte de pression 3 et la gaine anti-écrasement 4. Elle est formée d'un enroulement d'un élément allongé 11 dont le profil et/ou la configuration de l'enroulement (jeu, angle d'armage) favorise le drainage des gaz le long des éléments. Comme le montre la figure 2, le profil de l'élément allongé peut présenter des canaux latéraux ou gorges 12 qui permettent au gaz de circuler le long des éléments 11. Une autre solution illustrée figure 3 consiste à utiliser des profils ovoïdes qui ménagent entre eux des espaces (13,14) où le gaz peut être drainé. La nature du matériau utilisé pour former les éléments 11 de la couche de drainage spécifique 10 peut être de tous type. On peut notamment prévoir d'utiliser des profilés allongés métalliques ou en matière plastique tel que le polypropylène, le polyéthylène ou le polyfluorure de vinylidène (PVDF). Le matériau utilisé pour réaliser cette couche de drainage 10 doit toutefois être suffisamment résistant pour pouvoir transmettre à la voûte de pression sur laquelle elle est enroulée, la pression hydrostatique potentielle susceptible de s'appliquer sur la gaine intermédiaire 4 sans s'écraser. De plus les profilés peuvent présenter un profil auto-agrafable par exemple.

Selon une alternative non représentée, le drainage du gaz dans la couche spécifique de drainage 10 s'effectue dans les jeux existants entre les différents éléments qui la compose. Ainsi, la couche est conçue et enroulée de manière à ménager un jeu minimum entre les éléments allongés pour obtenir un drainage satisfaisant du gaz à l'intérieur de ces jeux.

Selon les modes de réalisation illustrées, la couche de drainage spécifique est formée de l'enroulement hélicoïdal à pas court d'éléments allongés. L'enroulement s'effectue selon un angle d'armage compris entre 55° et 80° et de préférence compris entre 55° et 70°. Selon un mode de réalisation préféré, cette couche spécifique 10 n'a pas d'autre fonction que de drainer le gaz situé dans l'annulaire « interne », elle n'apporte aucune contribution mécanique à la résistance de la structure. On peut noter que la couche spécifique de drainage (10) peut être réalisé par l'enroulement d'un seul élément allongé (11), dans le cas d'un angle d'armage élevé (proche de 80°), mais elle peut également être formée de l'enroulement de plusieurs éléments ou profilés lorsque l'angle d'armage de ladite couche diminue

Selon les modes de réalisation préférés illustrés de l'invention, la conduite flexible est de type «Smooth Bore» et comporte une gaine d'étanchéité comme élément le plus interne. Toutefois, l'invention peut également trouver son application dans une conduite de type «Rough Bore» où l'élément le plus interne est une carcasse. Dans ce cas, la couche de drainage spécifique permet de drainer le gaz qui diffuse au travers de la gaine de pression à l'intérieur d'un annulaire dit interne où se trouve la voûte de pression, tandis que la gaine intermédiaire permet de définir un annulaire « externe » où sont disposées les nappes d'armures de traction et dans lequel aucun gaz provenant du fluide transporté ne diffuse. Cette disposition particulière permet avantageusement de réaliser une conduite de type «Rough Bore» dont les armures de traction peuvent être réalisées dans un matériau sans tenir compte des critères NACE de résistance dudit matériau à la corrosion en milieu H2S.

## Revendications

1. Conduite tubulaire flexible (1) pour le transport de fluide dans le domaine de l'exploitation pétrolière offshore du type comportant au moins de l'intérieur vers l'extérieur une gaine de pression (2), une voûte de pression (3), une gaine intermédiaire (4), au moins une nappe d'armures de traction (5, 6) et une gaine externe de protection (7), **caractérisée en ce qu'**elle comporte une couche de drainage spécifique (10) formée de l'enroulement d'au moins un élément allongé (11) et positionnée entre la voûte de pression (3) et la gaine intermédiaire (4).

2. Conduite tubulaire flexible (1) selon la revendication 1 **caractérisée en ce que** la gaine de pression (2) est l'élément le plus interne de la conduite flexible.

3. Conduite tubulaire flexible (1) selon la revendication 1 **caractérisée en ce que** l'élément le plus interne de la conduite flexible est constitué d' une carcasse.

4. Conduite tubulaire flexible selon l'une quelconque des revendications précédentes **caractérisée en ce que** l'élément allongé (11) est enroulé autour de la voûte de pression selon un angle d'armage compris entre 55° et 80°.

5. Conduite tubulaire flexible (1) selon la.revendication 4 **caractérisée en ce que** l'angle d'armage est compris entre 55° et 70°.

6. Conduite tubulaire flexible (1) selon l'une quelconque des revendications précédentes **caractérisée en ce que** le ou les élément allongés (11) formant la couche de drainage sont réalisés en matière plastique.

7. Conduite tubulaire flexible (1) selon l'une quelconque des revendications précédentes **caractérisée en ce que** le ou les élément allongés (11) formant la couche de drainage (10) présentent une résistance suffisante dans le sens radial pour résister sans s'écraser à la pression hydrostatique régnant à la profondeur où la conduite doit être utilisée de manière à pouvoir transmettre cette pression à la voûte de pression (3) sur laquelle ils sont enroulés.

8. Conduite tubulaire flexible (1) selon l'une quelconque des revendications précédentes **caractérisée en ce que** le ou les éléments allongés (11) formant la couche de drainage spécifique (10) est ou sont enroulés de manière à ménager un jeu minimum entre les spires pour permettre le drainage du gaz à l'intérieur desdits jeux.

9. Conduite tubulaire flexible (1) selon l'une quelconque des revendications précédentes **caractérisée en ce que** le ou les éléments allongés (11) formant la couche de drainage (10) présentent des gorges ou rainures longitudinales (12) qui permettent le drainage du gaz à l'intérieur des gorges le long du ou des éléments.

## Patentansprüche

1. Flexible, röhrenförmige Leitung (1) für den Fluidtransport auf dem Gebiet der Offshore-Ölförderung der Art, umfassend wenigstens von innen nach außen eine Druckummantelung (2), ein Druckgewölbe (3), eine Zwischenummantelung (4), wenigstens eine Zug- bzw. Traktionsarmierungsschicht (5, 6) und eine äußere Schutzummantelung (7), **dadurch gekennzeichnet, daß** sie eine spezifische Drainageauflage bzw. -schicht (10) umfaßt, die durch das Aufrollen von wenigstens einem länglichen Element (11) gebildet ist und zwischen dem Druckgewöfbe (3) und der Zwischenummantelung (4) positioniert ist.

2. Flexible, röhrenförmige Leitung (1) nach Anspruch 1, **dadurch gekennzeichnet, daß** die Druckummantelung (2) das am weitesten innen liegende Element der flexiblen Leitung ist.

3. Flexible, röhrenförmige Leitung (1) nach Anspruch 1, **dadurch gekennzeichnet, daß** das am weitesten innen liegende Element der flexiblen Leitung von einer Karkasse gebildet ist.

4. Flexible, röhrenförmige Leitung nach einem der vorhergehenden Ansprüche, **dadurch gekennzeichnet, daß** das längliche Element (11) um das Druckgewölbe unter einem Armierungswinkel zwischen 55° und 80° gewickelt ist.

5. Flexible, röhrenförmige Leitung (1) nach Anspruch 4, **dadurch gekennzeichnet, daß** der Armierungswinkel zwischen 55° und 70° liegt.

6. Flexible, röhrenförmige Leitung (1) nach einem der vorhergehenden Ansprüche, **dadurch gekennzeichnet, daß** das oder die längliche(n) Element(e) (11), das bzw. die die Drainageschicht bildet (bilden), aus Kunststoffmaterial hergestellt ist bzw. sind.

7. Flexible, röhrenförmige Leitung (1) nach einem der vorhergehenden Ansprüche, **dadurch gekennzeichnet, daß** das oder die längliche(n) Element(e) (11), das bzw. die die Drainageschicht (10) bildet (bilden), einen ausreichenden Widerstand in radialer Richtung bzw. im radialen Sinn bzw. Richtungssinn zur Verfügung stellt, um ohne Eindrücken den hydrostatischen Druck, der in der Tiefe herrscht, zu widerstehen, oder daß die Leitung derart verwendet werden muß, um diesen Druck auf das Druckgewölbe (3) zu übertragen, um welches sie gewickelt sind.

8. Flexible, röhrenförmige Leitung (1) nach einem der vorhergehenden Ansprüche, **dadurch gekennzeichnet, daß** das oder die längliche(n) Element(e) (11), das bzw. die die spezifische Drainageschicht (10) bildet (bilden), in derartiger Weise gewickelt ist bzw. sind, um ein minimales Spiel zwischen den Wicklungen zur Verfügung zu stellen, um die Drainage des Gases im Inneren dieser Spiele zu ermöglichen.

9. Flexible, röhrenförmige Leitung (1) nach einem der vorhergehenden Ansprüche, **dadurch gekennzeichnet, daß** das oder die längliche(n) Element(e) (11), das bzw. die die Drainageschicht (10) bildet (bilden), Kehlen oder Längsrillen (12) aufweist (aufweisen), welche die Drainage des Gases im Inneren der Kehlen entlang des Elements oder der Elemente ermöglichen.

## Claims

1. Flexible tubular pipe (1) for transporting a fluid in the field of offshore oil production, of the type comprising at least, from the inside outwards, a pressure sheath (2), a pressure vault (3), an intermediate sheath (4), at least one tensile armour ply (5, 6) and an external protective sheath (7), **characterized in that** it includes a specific draining layer (10) that is formed from the winding of at least one elongate element (11) and is positioned between the pressure vault (3) and the intermediate sheath (4).

2. Flexible tubular pipe (1) according to Claim 1, **characterized in that** the pressure sheath (2) is the innermost element of the flexible pipe.

3. Flexible tubular pipe (1) according to Claim 1, **characterized in that** the innermost element of the flexible pipe consists of a carcass.

4. Flexible tubular pipe according to any one of the preceding claims, **characterized in that** the elongate element (11) is wound around the pressure vault with a lay angle of between 55° and 80°.

5. Flexible tubular pipe (1) according to Claim 4, **characterized in that** the lay angle is between 55° and 70°.

6. Flexible tubular pipe (1) according to any one of the preceding claims, **characterized in that** the elongate element or elements (11) forming the draining layer are made of a plastic.

7. Flexible tubular pipe (1) according to any one of the preceding claims, **characterized in that** the elongate element or elements (11) forming the draining layer (10) have sufficient strength in the radial direction to withstand being crushed by the hydrostatic pressure prevailing at the depth at which the pipe has to be used so as to be able to transmit this pressure to the pressure vault (3) around which they are wound.

8. Flexible tubular pipe (1) according to any one of the preceding claims, **characterized in that** the elongate element or elements (11) forming the specific draining layer (10) is or are wound so as to leave a minimum gap between the turns in order to allow the gas within the said gaps to drain away.

9. Flexible tubular pipe (1) according to any one of the preceding claims, **characterized in that** the elongate element or elements (11) forming the draining layer (10) have longitudinal channels or slots (12) that allow the gas in the channels to drain away along the element or elements.
